# EUROPÄISCHE PATENTANMELDUNG

(11) **EP 1 962 059 A1**
(43) Veröffentlichungstag der Anmeldung: **27.08.2008**
(21) Anmeldenummer: 08002396.3
(22) Anmeldetag: 08.02.2008
(51) Int. Cl.: G01C 21/32

(54) **Verfahren zur Hinterlegung von in digitalen Karten enthaltenen Fahrwegen**

(30) Priorität: 26.02.2007 DE 102007009640
(71) Anmelder: Deutsches Zentrum für Luft- und Raumfahrt e.V., 51147 Köln (DE)
(72) Erfinder: Noyer, Ulf, 38110 Braunschweig (DE); Niehoff, Nico, 38173 Sickte (DE)
(74) Vertreter: Gerstein, Hans Joachim

(57) **Zusammenfassung**

Die Erfindung betrifft ein Verfahren zur Hinterlegung von in digitalen Karten enthaltenen Fahrwegen, die aus durch eine Vielzahl von Messpunkten gebildeten Punktlinien bestehen, wobei die Fahrwege in eine Mehrzahl von Segmenten unterteilt sind, für jedes Segment in Abhängigkeit der Punktlinie des entsprechenden Segmentes eine Segmentfunktion ermittelt und die Fahrwege so als die Menge ihrer Segmentfunktion hinterlegt werden.

## Beschreibung

Die Erfindung betrifft ein Verfahren zur Hinterlegung von in digitalen Karten enthaltenen Fahrwegen, die aus durch eine Vielzahl von Messpunkten gebildeten Punktlinien bestehen.

Die in digitalen Karten enthaltenen Fahrwege, wie z. B. Straßen oder Schienen, bestehen in der Regel meist aus einer Vielzahl von Messpunkten, die zusammen eine Punktlinie bilden und somit den entsprechenden Fahrweg charakterisieren. Um eine solche Punktlinie zu erhalten, muss im Vorfeld zunächst der betreffende Fahrweg mittels einer geeigneten Messvorrichtung vermessen werden. Üblicherweise wird dazu der entsprechende Fahrweg abgefahren, wobei währenddessen kontinuierlich die Position ermittelt und gespeichert wird. Aus dieser Vielzahl von Messpunkten kann dann eine Punktlinie gebildet werden, welche den entsprechenden Fahrweg repräsentiert.

Aus diesen Messpunkten bzw. Punktlinien können dann z. B. die für digitale Karten notwendigen Fahrwege hinterlegt werden. Solche digitalen Karten sind z. B. aus der Navigation bekannt. Dabei wird der Straßenverlauf nur sehr grob durch Geraden angenähert, wodurch es zu Ungenauigkeiten kommt, die jedoch bei der Verwendung zur Navigation vernachlässigt werden können. Werden jedoch hochpräzise digitale Straßenkarten benötigt, müssen die Messpunkte ebenfalls hochgenau sein. Außerdem müssen die Messpunkte derart dicht aufeinander folgen, dass das Interpolieren von einem Messpunkt zum nächstfolgenden Messpunkt nicht zu Ungenauigkeiten führt. Solche hochpräzisen digitalen Straßenkarten werden z. B. bei der Bauplanung von Schienen- oder Straßenwegen, aber auch bei der Bahnplanung eines (semi-) autonom fahrenden Fahrzeuges benötigt. Insbesondere im letzten Fall bildet die Karte eine wesentliche Grundlage für das regelungstechnische Problem.

Nachteilig dabei ist, dass aufgrund der Vielzahl von benötigten Messpunkten die Datenmenge pro Fahrweg enorm groß ist, so dass sowohl die Datenhaltung als auch die Datenübertragung bzw. Datenfernübertragung mit zusätzlichen Kosten verbunden ist. Die bei der Navigation verwendeten digitalen Straßenkarten können dabei nicht verwendet werden, da ihre Genauigkeit für das oben beschriebene Aufgabengebiet nicht ausreicht.

Aufgabe der Erfindung ist es daher, ein verbessertes Verfahren anzugeben, mit dem Fahrwege in digitalen Karten hochgenau und Speicherplatz sparend hinterlegt werden können.

Die Aufgabe wird mit dem Verfahren der eingangs genannten Art erfindungsgemäß gelöst durch Unterteilen der Fahrwege in eine Mehrzahl von Segmenten, Ermitteln einer Segmentfunktion für jedes Segment in Abhängigkeit der Punktlinie des entsprechenden Segmentes und Hinterlegen der Fahrwege als Menge ihrer Segmentfunktionen.

Die Lehre der vorliegenden Erfindung geht demnach davon aus, dass die zu digitalisierenden Fahrwege zunächst in eine Mehrzahl von aufeinander folgenden Segmenten unterteilt werden. Zu jedem Segment wird nun eine Funktion ermittelt, die in Abhängigkeit der zu jedem Segment gehörenden Punktlinie bestimmt wird. Die Punktlinie besteht dabei aus einer Reihe von zuvor ermittelten Messpunkten des Fahrweges, wobei die zu ermittelnde Funktion vorteilhafterweise die Punktlinie des Segmentes annähert. Sind für alle Segmente des Fahrweges die entsprechenden Segmentfunktionen ermittelt, so kann der Fahrweg als die Menge seiner Segmentfunktionen hinterlegt bzw. abgespeichert werden.

Damit ist es möglich, dass der Fahrweg nicht wie bisher als die Menge seiner Messpunkte hinterlegt wird, sondern der Fahrweg nunmehr durch eine Reihe von Funktionen beschrieben wird. Dadurch kann die Datenmenge pro Fahrweg deutlich reduziert werden, da nicht mehr jeder Messpunkt einzeln hinterlegt werden muss.

Die Segmentierung der Fahrwege erfolgt dabei meist so, dass der Endpunkt des vorangegangenen Segmentes den Startpunkt des darauf folgenden Segmentes bildet. Es ist aber auch denkbar, dass die Segmente sich überlappen.

Vorteilhafterweise werden die Punktlinien der Segmente durch Splines, Klothoiden oder Bezierkurven angenähert. Insbesondere Klothoiden eignen sich dabei besonders gut, da sie häufig bei der Planung von Straßenverläufen verwendet werden. Klotoiden sind Funktionen, die durch eine Startkrümmung und eine Änderung der Krümmung beschrieben werden. Damit lassen sich im Straßen- und Schienenbau besonders harmonische Übergänge zwischen Geraden und Kurvenverläufen beschreiben, bei denen keine sprunghaften Richtungsänderungen auftreten. Um die benötigte Speicherkapazität möglichst gering zu halten, werden vorteilhafterweise nur die Parameter der einzelnen Segmentfunktionen gespeichert. So ist es denkbar, dass das Verfahren auf einem bestimmten Typ von Segmentfunktion eingeschränkt wird und lediglich die Parametrisierung der einzelnen Segmentfunktionen gespeichert wird, anstatt zu jedem Segment jeweils die entsprechende Funktion zu hinterlegen.

Weiterhin ist es vorteilhaft, wenn bei der Unterteilung der Fahrwege in Segmente die Länge der Segmente so gewählt wird, dass sie maximal ist. Das heißt mit anderen Worten, um die Datenmenge möglichst gering zu halten, werden die Fahrwege so in Segmente unterteilt, dass die Anzahl der Segmente pro Fahrweg möglichst gering ist. Allerdings darf ein Segment nicht zu lang gewählt werden, da ansonsten die dem Segment zugeordnete Funktion die Punktlinie nicht mehr hinreichend genau annähert.

Es ist daher besonders vorteilhaft, wenn die Länge der Segmente in Abhängigkeit einer Gütefunktion gewählt werden, so dass sichergestellt werden kann, dass die Segmentfunktionen die Punktlinien der Segmente hinreichend genau beschreiben. Die Gütefunktion kann demnach als eine Qualitätsfunktion erkennen, ob die Segmentfunktion das Segment hinreichend genau beschreibt oder ob das entsprechende Segment zu lang gewählt wurde. So ist es z. B. denkbar, dass die Gütefunktion die Abweichung zwischen der Punktlinie des Segmentes und dem Kurververlauf der Segmentfunktion ermittelt, wobei in Abhängigkeit dieser Abweichung die Länge des Segmentes verändert werden kann.

So ist es ganz besonders vorteilhaft, wenn die Länge des Segmentes erst dann geändert wird, wenn die Abweichung der Gütefunktion einen bestimmten Schwellenwert überschritten hat. Es ist aber auch denkbar, der Wert der Abweichung als quantitatives Maß für die Änderung der Länge verwendet wird. Das heißt, je größer die Abweichung ist, desto stärker wird das Segment verkürzt. Als Abweichung kann dabei zum Beispiel der Abstand zwischen der Punktlinie und dem Kurvenverlauf betrachtet werden, aber auch die Abweichung des Kurswinkels. So ist es z. B. denkbar, dass bei einer zu großen Abweichung des Kurswinkels das Segment entsprechend verkürzt wird.

Weiterhin ist es besonders vorteilhaft, wenn die Unterteilung der Fahrwege in Segmente derart erfolgt, dass die Länge der Segmente in Abhängigkeit von Metainformationen bzw. Metadaten der Fahrwege und/oder der Segmente gewählt werden. Solche Metainformationen bzw. Metadaten sind Basisinformationen über die Art und Eigenschaft der Fahrwege und können z. B. die Anzahl der Fahrspuren eines Fahrweges, die Breite der Fahrspuren, die Fahrbahnmarkierungen oder Auf- und Abfahrten sein. So ist es z. B. denkbar, dass ein neues Segment begonnen wird, wenn sich die Metadaten bzw. Metainformationen ändern. So kann ein neues Segment genau dann begonnen werden, wenn sich die Fahrbahnmarkierung von einer durchgezogenen Linie in eine gestrichelte Linie ändert.

Um eine hinreichende Näherung für die Segmentfunktion zu erhalten, ist es besonders vorteilhaft, wenn die Länge des Segmentes schrittweise verkürzt wird. Dazu wird bei jedem Schritt die Segmentfunktion ermittelt und überprüft, wie genau die ermittelte Segmentfunktion gegenüber der Punktlinie des Segmentes ist. Ist eine hinreichende Genauigkeit der Segmentfunktion festgestellt worden, so braucht das betreffende Segment nicht weiter verkürzt zu werden. Andernfalls muss ein weiterer Iterationsschritt durchgeführt werden.

Weiterhin ist es besonders vorteilhaft, wenn die durch dieses Verfahren ermittelten Fahrwege auf einem digitalen Speichermedium hinterlegt werden.

Die vorliegende Erfindung wird anhand der beigefügten Zeichnung beispielhaft näher erläutert. Es zeigen:
- Fig. 1 a, 1b -: Darstellung des schrittweisen Verkürzens eines Segmentes, bis eine aktzeptable Näherung durch die Segmentfunktion vorliegt;
- Fig. 2 -: Darstellung eines durch eine Mehrzahl von Segmentfunktionen angenäherten Fahrweges;

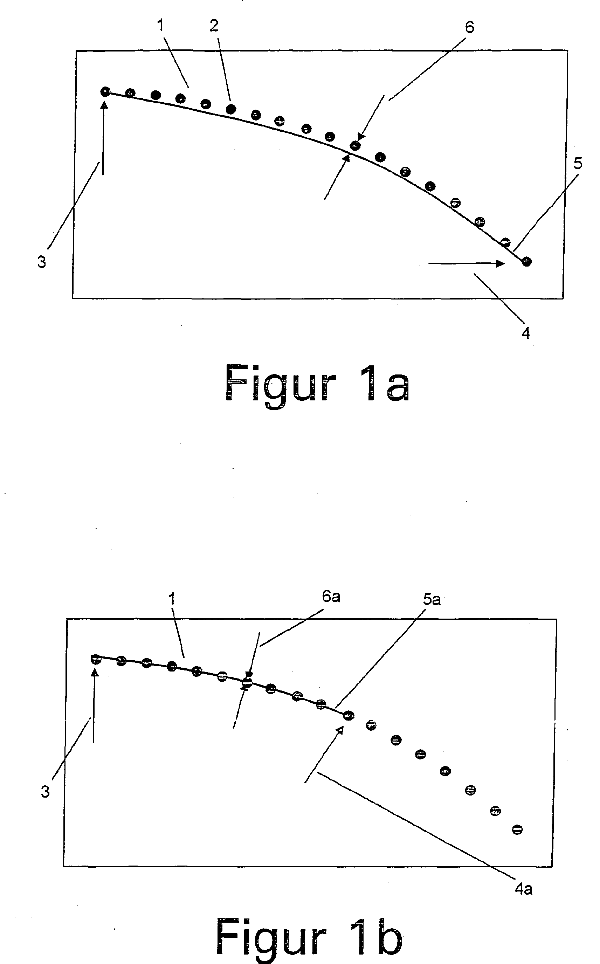

Fig. 1 a zeigt das Ergebnis nach einem ersten Segmentierungsschritt. Das betreffende Segment besteht dabei aus einer Punktlinie 1, bestehend aus einer Mehrzahl von Messpunkten 2. Das Segment wird gebildet durch einen Anfang 3 und ein Ende 4, wobei dazwischen eine Segmentfunktion ermittelt wurde, deren Kurvenverlauf 5 die Punktlinie 1 annähert.

In einem nächsten Schritt wird ermittelt, ob der Kurvenverlauf 5 der Segmentfunktion die Punktlinie 1 hinreichend genau annähert. Dazu wird der Abstand 6 zwischen Punktlinie 1 und Kurvenverlauf 5 der Segmentfunktion bestimmt und überprüft, ob dieser einen vorher definierten Schwellenwert übersteigt. Der Abstand 6 ist damit ein qualitatives Maß der Annäherung.

Wird festgestellt, dass der Kurvenverlauf 5 der Segmentfunktion die Punktlinie 1 nicht hinreichend genau annähert, so muss das betreffende Segment verkürzt werden. Dies ist schematisch dargestellt in Fig. 1 b. Zwischen dem Segmentanfang 3 und dem neu gewählten Segmentende 4a wird nunmehr wieder eine Segmentfunktion ermittelt, dessen Kurvenverlauf 5a die betreffende Punktlinie 1 entsprechend annähert. Der Abstand 6a zwischen Punktlinie und angenäherte Segmentfunktion wird ebenfalls wieder ermittelt, um festzustellen, wie genau die Segmentfunktion die Punktlinie 1 annähert. In dem Ausführungsbeispiel in Fig. 1b ist zu erkennen, dass der Kurvenverlauf 5a der Segmentfunktion die Punktlinie in dem Segment zwischen Anfang 3 und Ende 4a hinreichend genau annähert, so dass auf ein weiteres Verkürzen des Segmentes verzichtet werden kann. In diesem Fall würde das Segmentende 4a einen neuen Anfang 3 für ein darauf folgendes Segment bilden und das Segmentierungsverfahren würde mit dem nächsten Segment durchgeführt werden. Auf diese Weise kann ein vermessener Fahrweg hinreichend genau durch eine Reihe von Segmentfunktionen beschrieben werden, ohne dass jeder einzelne Messpunkt gespeichert werden muss.

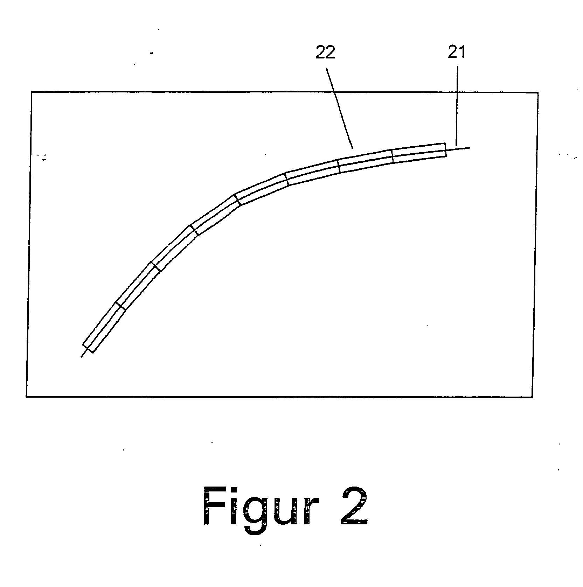

Fig. 2 zeigt schematisch das Ergebnis eines solchen Segmentierungsverfahrens für einen Fahrweg. Wie zu erkennen ist, ist der Fahrweg 21 in eine Reihe von Segmenten 22 unterteilt. Für jedes Segment 22 existiert dabei eine Segmentfunktion, die den Fahrweg im Segmentbereich hinreichend genau annähert. Somit kann der Fahrweg 21 als die Menge seiner Segmentfunktionen der einzelnen Segmente 22 beschrieben werden. Die Segmente 22 des Fahrweges 21 wurden dabei schrittweise soweit verkürzt, bis die Überprüfung durch eine Gütefunktion festgestellt hat, dass die Annäherung der Segmentfunktion an den Fahrweg für das gestellte Aufgabengebiet hinreichend genau ist.

## Patentansprüche

1. Verfahren zur Hinterlegung von in digitalen Karten enthaltenen Fahrwegen, die aus durch eine Vielzahl von Messpunkten gebildeten Punktlinien bestehen, **gekennzeichnet durch** Unterteilen der Fahrwege in eine Mehrzahl von Segmenten, Ermitteln einer Segmentfunktion für jedes Segment in Abhängigkeit der Punktlinie des entsprechenden Segmentes und Hinterlegen der Fahrwege als die Menge ihrer Segmentfunktionen.

2. Verfahren nach Anspruch 1, **gekennzeichnet durch** Ermitteln der Segmentfunktion als eine die Punktlinie des entsprechenden Segmentes annähernde Funktion.

3. Verfahren nach Anspruch 1 oder 2, **gekennzeichnet durch** Klothoiden, Splines oder Bezierkurven als Segmentfunktionen.

4. Verfahren nach einem der vorhergehenden Ansprüche, **gekennzeichnet durch** Hinterlegen der Parameter der Segmentfunktionen.

5. Verfahren nach einem der vorhergehenden Ansprüche, **gekennzeichnet durch** Unterteilen der Fahrwege in Segmente derart, dass die Länge mindestens eines Segmentes maximiert wird.

6. Verfahren nach einem der vorhergehenden Ansprüche, **gekennzeichnet durch** Unterteilen der Fahrwege in Segmente derart, dass die Länge mindestens eines Segmentes in Abhängigkeit von den Fahrweg oder das Segment betreffende Metadaten gewählt wird.

7. Verfahren nach einem der vorhergehenden Ansprüche, **gekennzeichnet durch** Unterteilen der Fahrwege in Segmente derart, dass die Länge mindestens eines Segmentes in Abhängigkeit einer Gütefunktion gewählt wird.

8. Verfahren nach Anspruch 7, **dadurch gekennzeichnet, dass** die Gütefunktion eine Abweichung zwischen der Punktlinie eines Segmentes und dem Verlauf der dazugehörigen Segmentfunktion bestimmt, wobei die Länge mindestens eines des Segmentes in Abhängigkeit der entsprechenden Abweichung gewählt wird.

9. Verfahren nach Anspruch 8, **dadurch gekennzeichnet, dass** die Länge mindestens eines Segmentes derart gewählt wird, dass die Abweichung einen definierbaren Schwellenwert nicht übersteigt.

10. Verfahren nach Anspruch 8 oder 9, **dadurch gekennzeichnet, dass** als Abweichung der Abstand und/oder der Kurswinkel betrachtet wird.

11. Verfahren nach einem der vorhergehenden Ansprüche, **dadurch gekennzeichnet, dass** ein Segment schrittweise verkürzt wird, bis eine hinreichende Nährung durch die Segmentfunktion erfolgt.

12. Verfahren nach einem der vorhergehenden Ansprüche, **gekennzeichnet durch** Hinterlegen der Fahrwege auf einem digitalen Speichermedium.
